# EUROPEAN PATENT SPECIFICATION

(11) **EP 0 775 341 B1**
(45) Date of publication and mention of the grant of the patent: **30.06.1999**
(21) Application number: 95926702.2
(22) Date of filing: 14.07.1995
(51) Int. Cl.: G06F 1/00

(54) **APPARATUS AND METHOD FOR LIMITING ACCESS TO A LOCAL COMPUTER NETWORK**
VORRICHTUNG UND VERFAHREN ZUR BEGRENZUNG DES ZUGRIFFS AUF EIN LOKALES RECHNERNETZ
PROCEDE ET DISPOSITIF PERMETTANT DE LIMITER L'ACCES A UN RESEAU LOCAL D'ORDINATEURS

(30) Priority: 09.08.1994 US 287790
(43) Date of publication of application: 28.05.1997
(73) Proprietor: Shiva Corporation, Bedford, MA 01730 (US)
(72) Inventor: HOROWITZ, Michael, Alan, Newton, MA 02158 (US); RODWIN, Andrew, S., Boxborough, MA 01719 (US); WENOCUR, Jonathan, H., Brighton, MA 02146 (US)
(74) Representative: Altenburg, Udo, Dipl.-Phys.
(86) International application number: US9508900
(87) International publication number: WO9605549

(56) References cited:
- EP-A- 0 513 484
- US-A- 4 310 720
- INTERNATIONAL CONF. ON ENERGY, COMPUTER, COMMUNICATION AND CONTROL SYSTEMS, 30 August 1991, NEW DELHI, INDIA; pages 103 - 107 S.K.BOSE ET AL 'Remote DOS Disk Server on a UNIX Machine'

## Description

### Field of the Invention

This invention relates to an apparatus and method for restricting a remote user's access to a local computer network, and more particularly to a remote access server which restricts the access.

### Background of the Invention

The client-server computer networking model allows organizations of all sizes to utilize group productivity products such as e-mail. Many business organizations have grown to rely heavily on network services. Employees who travel typically need to access the same network services and resources provided to them at work. Field offices also frequently need to access the headquarter's network services. The term "telecommuter" has been used to describe an employee who stays at home and conducts business by accessing the network services provided at the traditional worksite. These types of users are sometimes referred to as "remote" because they typically are located in a physically remote place from the networks and because they do not connect to the networks locally or directly. Remote users typically connect to the networks via telephone lines. The terms "remote access" and "remote networking" are used to identify the situation in which a remote user accesses a computer network over analog or digital telephone lines.

A remote user generally can utilize any type of computer to access the network. The computer can be, for example, a personal computer, a workstation, or a portable computer such as a laptop computer or a notebook computer. Also, the computer can be, for example, an IBM PC or compatible, an Apple Macintosh, or a Unix-based computer. The user typically connects a modem or similar communication device to a serial port of the computer. The modem connected to the user's remote computer communicates over the telephone lines with another modem which is coupled to a server. The other modem and the server are located at the network which the remote computer is attempting to access. The server is coupled directly to the network. It is the server which provides the remote computer with controlled access to the network and the services and resources thereon. The server is referred to as a "remote access server," and it typically includes a serial port for connecting to the other modem, a port for connecting to the network, and electronics which include at least a microprocessor and memory.

It is desirable for the remote access server to have a variety of features. For example, the remote access server should make accessing the network transparent to the remote user. The remote access server also should be easy for a network manager to install and maintain.

EP-A-0 513 484 discloses a method for limiting access to a local computer network including a number of workstations at which administrative commands for configuring or monitoring the network may be entered. The system appends to each request from a workstation the operators's user identification, account number, and corporate affiliation; process to which such requests are routed for disposition may perform checks regarding the appropriateness of fulfilling the request in light of these parameters.

In the International Conference on Energy, Computer, Communication and control systems, 30th August 1991, New Delhi, India; pages 103 -107, S.K. Bose et al, "Remote DOS disk server on a UNIX machine" each user has a login name and is authenticated by a password during login. The server can support multiple simultaneous login sessions. To access a remote disk, a user must map a remote drive number to that disk. A user may map to any dosdisk on the server provide he has the required access rights.

### Summary of the Invention

It is an object of the invention to provide a remote access server which allows one or more remote computers to access simultaneously a local computer network, even if each of the remote computers employs a different protocol (e.g., IPX, TCP/IP, AppleTalk, NetBEUI, or 802.2/LLC).

It is another object of the invention to provide a remote access server which provides user authentication and security features. The objects are achieved with a method as defined in claim 1 and a server as defined in claim 7. Preferred embodiments are defined in the subclaims. One aspect of these features is that the server can restrict access to the network on a per-user basis. The remote access server controls a remote user's access to the various network services and resources by locating and utilizing one or more access filters for that remote user. The server ensures that each remote user has a particular set of access filters assigned to him or her every time that remote user makes a remote access connection to the network via the server, even though that remote user may utilize a different remote computer every time a remote access connection is made. The server uses a user identification string, which is entered into the remote computer by the remote user, to retrieve from a server-internal or server-external database the access filters associated with that remote user. The database typically is centrally maintained by a network manager with authority to add and delete remote users and access filters.

The remote access server uses the access filters to control the remote users' access to the network and the services, resources, and devices available thereon. The server typically limits a remote user's network access to one or more network "zones" and/or one or more network devices. Zones are pre-defined groups of devices on the network, and devices can include computers coupled directly to the local network, various servers (e.g., e-mail, database, etc.) and various other network nodes such as printers and plotters.

Because it has the power to control a remote user's access to the resources of the network, the remote access server can ensure that only certain remote users are allowed access to certain resources of the network, such as only those resources listed in the database. If the server locates an access filter for a remote user which indicates that the remote user should-not have access to a particular zone or device, that remote user will not be allowed to communicate with that zone or device regardless of the remote computer used in the attempt to gain access. The remote user will, however, be able to communicate with other non-restricted parts of the network. The network restrictions are done by the remote access server on a per-user basis. The remote access server will identify and use access filters for each remote user which attempts to gain access to the network via the server.

Per-user assignment of access filters is very different from other network restriction techniques such as per-port schemes and per-server schemes. With per-port filter assignment, each port of the server has one or more filters associated therewith and those filters are assigned to whichever remote computer happens to communicate through that port. With per-server filter assignment, the server has one or more filters associated therewith and those filters are assigned to whichever remote computers dial into that server. Both the per-port and per-server schemes, unlike per-user, do not provide a correspondence between a remote user and a set of access filters. These two other schemes do not, unlike per-user, tie network access restriction to remote user identity. It therefore is not possible with either per-port or per-server to control network access precisely, as it is with per-user which is based on the identity of the remote user.

Other objects, aspects, features, and advantages of the invention will become apparent from the following description and from the claims.

### Brief Description of the Drawings

In the drawings, like reference characters generally refer to the same parts throughout the different views. Also, the drawings are not necessarily to scale, emphasis instead generally being placed upon illustrating the principles of the invention.

FIG. 1 is a diagram of a remote access system in which a remote access server according to the invention provides a remote user at a remote computer with access to a local computer network.

FIG. 2 is a diagram of a remote access system shown in more detail than the system shown in FIG. 1.

FIG. 3 is a flowchart of the steps a remote access server performs in order to provide a remote user at a remote computer with access to a local computer network according to the invention.

FIG. 4 is a block diagram showing major components of a remote access server according to the invention.

### Description

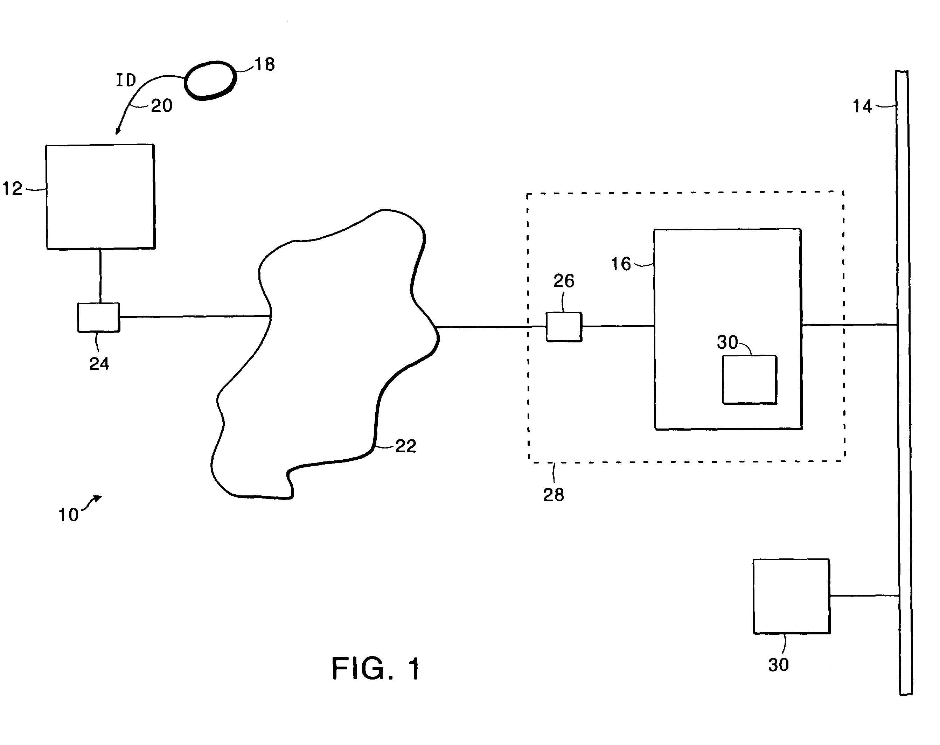

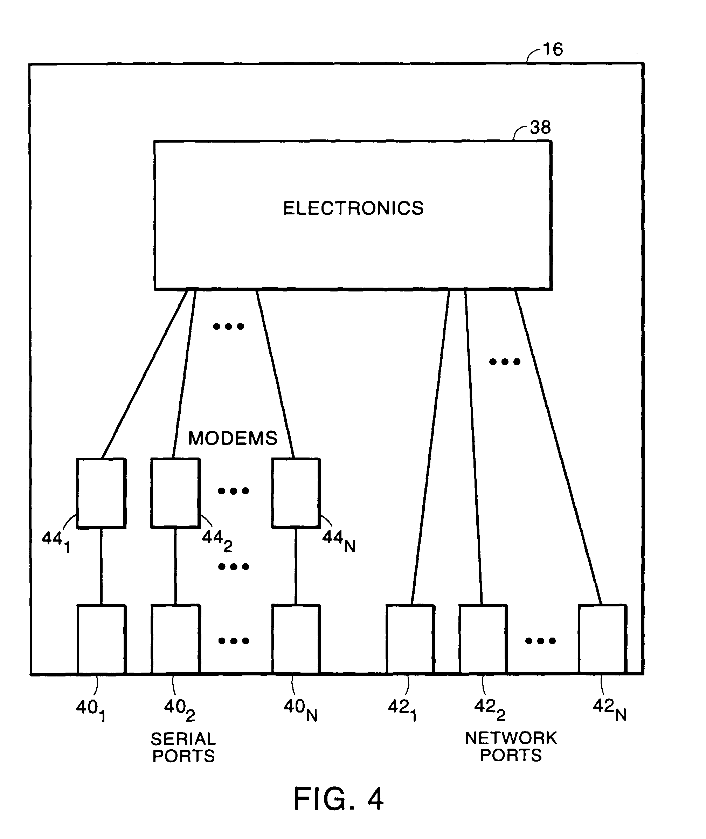

Referring to FIG. 1, in a remote access system 10, a remote computer 12 is allowed access to a local computer network 14 by a remote access server 16. As will be described in more detail later with reference to FIG. 4, the remote access server 16 is itself a powerful programmable computer. In the disclosed embodiment, the remote access server 16 is a LanRover which is available from Shiva Corporation of Burlington, MA. A remote user 18 at the remote computer 12 initiates an attempt to gain access to the network 14 (and the network services and resources available thereon) via the remote access server 16 by entering a user identification (ID) string 20 into the remote computer 12. The user ID string is a predetermined code which uniquely identifies the remote user, and it typically is assigned to the remote user by a network manager who has central control of and responsibility for the network 14 and the maintenance thereof.

The user ID string 20 entered by the remote user 18 is sent by the remote computer 12 to the remote access server 16 over telephone lines 22. The term telephone lines 22 is used herein to mean any digital and/or analog communication link or links used to transmit voice and/or data including wireless and cellular data links such as Cellular Digital Packet Data (CDPD). In the disclosed embodiment, a modem 24 is connected to the remote computer 12, and another modem 26 is connected to the remote access server 16. The modems 24, 26 allow the remote computer 12 and the remote access server 16 to communicate over the telephone lines 22. Note that the modem 26 connected to the remote access server 16 could be part of the server 16 (e.g., included within the server housing), as indicated by the dotted-line box 28 enclosing the server 16 and the modem 26 connected thereto. Also note that the modems 24, 26 could be Integrated Services Digital Network (ISDN) terminal adapters if the telephone lines 22 are the ISDN, or the modems 24, 26 could be any of a variety of other switched-access devices.

The remote access server 16 receives the user ID string 20 which was entered by the remote user 18 and sent by the remote computer 12. An optional user authentication procedure may occur at this time where a remote user proves his or her identity by entering a password, by reference to an authentication server database, or by any other method. Once the remote user is authenticated, that remote user is granted access to the network. Further authorization may occur in order for an authenticated user to become an authorized user and be granted access to specific network services. In any event, the server 16 uses the user ID string 20 to index into a database 30 and retrieve one or more access filters associated with the user ID string 20. The server 16 uses these access filters to control the remote user's access to the network 14 and the network services and resources available thereon. The database 30 can be resident in the remote access server 16, or it can be maintained on a node (e.g., a database server) on the network 14. The database 30 includes a unique user ID string for each remote user and at least one access filter for each user ID string. The database 30 typically is maintained by a network manager who has central control of and responsibility for the network 14 and the maintenance thereof. The network manager generally controls (e.g., has the authority and ability to define, add, and delete) remote user names and access filters.

After the remote access server 16 identifies the access filters for this remote user based on the user ID string 20, the server 16 uses the filters to limit the remote user's network access. Every time the remote computer 12 attempts to communicate on the network 14 via the remote access server 16, the server 16 uses the access filters for that remote user to prevent the remote user from communicating with whatever network resources the filters indicate are off-limits to that remote user.

An access filter can be data packets or words which identify particular network resources such as zones or devices. A zone is a pre-defined group of devices on the network 14. A network device can include computers coupled directly to the local network 14, various servers (e.g., e-mail, database, etc.) coupled directly to the local network 14, and various other nodes on the network 14 such as printers and plotters. Whatever the network resource or resources identified in the access filter, the filter is used by the server 16 to prevent the remote user's remote computer 12 from communicating with the resource(s). Because the database 30 contains a particular set of access filters for certain remote users, the server 16 is able to match one or more filters to each access attempt by those remote users and to limit the network access of those remote users if the filters so dictate.

Filters are protocol dependent and generally employ a look-up service that functions in the following manner. Various network services advertise their presence on the network. Requests for access to network services are processed by the remote access server. The remote access server refers to another network server that contains an access list. If the user is identified as authorized by the access list, access is granted, otherwise services are simply not identified as being available to the requesting user.

In general, the remote access server 16 will not restrict network access unless the user ID string 20 entered by the remote user 18 at the remote computer 12 corresponds to one or more access filters in the database 30. That is, if the remote access server 16 searches the database 30 but fails to find any access filters associated with the user ID string 20 which the remote user 18 entered at the remote computer 12 (because, for example, the user ID string 20 is in the database 30 but there are no associated access filters listed in the database 30), the remote access server 16 will not limit the network access for that remote user, and thus that remote user will be able to communicate freely on the network 14. In this situation, the remote access server 16 will pass all data packets from the remote computer 12 or the remote user 18 on to the network 14.

The remote access server 16 ensures that each remote user 18 whose network access should be restricted as indicated by the access filters in the database 30 is in fact so restricted every time that remote user 18 makes a remote access connection to the network 14 via the server 16, even though that remote user 18 may utilize a different remote computer 12 every time a remote access connection is made. By linking network access to the identity of the individual remote users, the remote access server 16 can effectively restrict remote users' network access to only those network resources authorized by a central controller (i.e., the network manager who maintains the database 30).

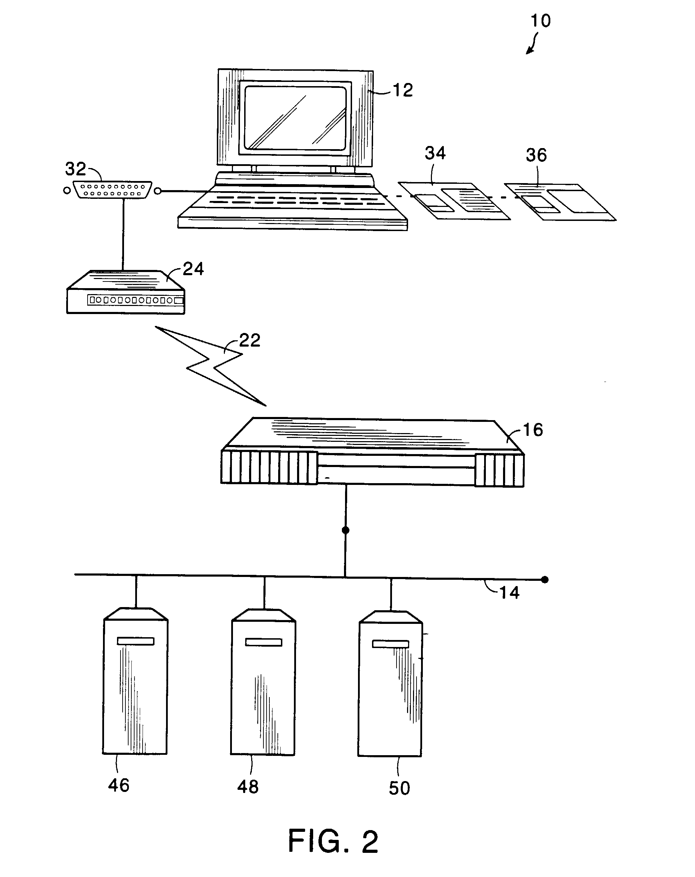

The remote access system 10 shown generally in FIG. 1 is shown in more detail in FIG. 2. Referring to FIG. 2, the remote computer 12 is a portable laptop computer. In general, the remote computer 12 can be any type of portable computer (e.g., a laptop or a notebook), workstation, or personal computer (e.g., an IBM PC or compatible, an Apple Macintosh, or a Unixbased computer). The remote computer 12 generally must be able to function as a stand-alone computer system when not connected to a network, and as a full network node when it is dialed-in to the network 14 through the remote access server 16. For a remote Macintosh system, it generally is preferred that the computer have a 25 MHz 68030 processor. For a remote PC system, it generally is preferred that the computer have at least a 25 MHz 486 processor.

The remote access system 10 described herein is not to be confused with a remote control system. In a remote control system, a remote user dials-in to the local network with his or her remote computer and takes control of a local computer on the network. Once the remote user's remote computer is connected to the local network in a remote control system, the remote user actually uses the local computer, not the remote computer. That is, only user-interface data (e.g., screen images and keyboard/mouse input) are transferred to the remote computer from the local computer; the remote computer acts as a dumb terminal in a remote control system.

A remote control system is very different from the remote access system 10. In the remote access system 10, the remote computer 12 must perform adequately by itself, with enough processing power, memory, and disk storage space to run (on the remote computer 12 itself) the remote user's chosen applications without relying upon the on-network communication speed which typically is much higher than the speed of the telephone line link 22. Some telephone lines 22 allow speeds of up to 28.8 kilobits per second whereas the local computer network 14 can operate in ranges from 1 to 100 megabits per second depending on the type of network. The local computer network 14 can be, for example, Ethernet or Token Ring.

The remote computer 12 typically will have a serial port 32 which is managed by a serial controller such as a 16550A serial controller chip which can receive or transmit up to sixteen characters without intervention from the central processing unit (CPU) of the remote computer 12. The modem 24 connected to the serial port 32 can be, for example, a 2400 bits per second or faster Hayes or Hayes compatible modem. A rate of 9600 bits per second or above is recommended for the modem 24. The modem 24 also can be, for example, a V.32bis modem (14.4 kilobits per second) or an ISDN terminal adapter. The other modem 26 (which is not shown in FIG. 2 because it is internal to the remote access server 16) is selected to operate properly given the telephone lines 22 employed and the modem 24 connected to the serial port 32.

The network services and resources available on the network 14 which the remote user 18 might access via the remote access server 16 can include, for example, a Notes Server 46, an E-Mail Server 48, and a Database Server 50. The Database Server 50 can be used to maintain the database 30 of user names and access filters which was described previously with reference to FIG. 1.

The remote computer 12 can be loaded with network application software 34 and remote access client software 36. The remote access client software 36 can allow, for example, a Macintosh computer to use AppleTalk Remote Access (ARA), a Unix-based computer to use a Point-to-Point Protocol (PPP) implementation, and a PC-based computer to use any standard (if any) or vendor-supplied remote access clients. Briefly, a remote access client includes a "dialer" which establishes and terminates the remote access connection and a "driver" which interfaces with the network. protocol stacks and the serial port 32 to send and receive network data. The remote access client can operate with a variety of protocols including IPX, TCP/IP, NetBEUI, LLC/802.2, and AppleTalk. Novell's IPX is the native protocol for NetWare. TCP/IP is widely used in Unix-based systems and client-server databases, and TCP/IP also is becoming standard for many other applications. NetBEUI is used for LAN Manager and Microsoft's Windows for Workgroups. LLC/802.2 is for IBM LAN Server and host connectivity. The combination of AppleTalk and TCP/IP covers almost all Macintosh applications.

The performance of the remote access server 16 is primarily determined by the ability to move data through its serial ports (shown in FIG. 4 but not in FIG. 2) without much attention from its CPU (also shown in FIG. 4 but not in FIG. 2). The performance of the server 16 also is determined by its CPU's ability to perform the routing, filtering, IP address tracking, etc. that the CPU must do without adding undue delays as it forwards data packets. The server 16 thus has generally been optimized for serial port throughput and general CPU power. Because the server 16 must be highly reliable and efficient, it includes solid-state, non-volatile storage for the controlling software. The software is upgradeable via downloading from the network 14 to the server 16. The network manager can perform any upgrades.

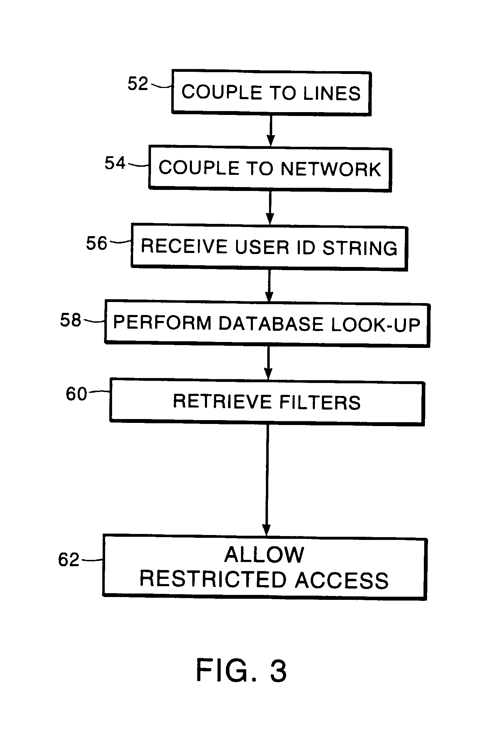

The software in the remote access server 16 causes the server 16 to perform the various functions described herein, although it should be noted that it is possible to use dedicated electronic hardware to perform all server functionality described herein. The steps which the server performs in order to control a remote user's access to a local computer network according to the invention are shown in FIG. 3.

Referring to FIG. 3, it is first necessary to setup the connections by coupling a communication port of the remote access server to the telephone lines (step 52) and coupling a network port of the remote access server to the local computer network (step 54). The server is now ready to receive a dial-in from a remote computer over the telephone lines and to communicate on the local network. After the remote access server is set-up, the remote user can cause the remote computer to dial-in and connect to the server over the telephone lines. The remote user then enters into the remote computer a user ID string which the remote computer sends to the server over the telephone lines. The user ID string uniquely identifies that remote user. The remote access server receives the user ID string from the communication port (step 56). Note that after step 56, an optional user authentication procedure may occur where a remote user proves his or her identity by entering a password, by reference to an authentication server database, or by any other method. Once the remote user is authenticated, that remote user is granted access to the network. Further authorization may occur in order for an authenticated user to become an authorized user and be granted access to specific network services. In any event, the remote access server then uses the received user ID string to perform a look-up in the database of user ID strings and access filters (step 58). The remote access server retrieves from the database one or more access filters associated with the user ID string, if any (step 60). The remote access server then allows the remote computer to access the local computer network and to communicate on the network, but the server uses the access filter(s) to prevent the remote computer from communicating with the network resource(s) identified by the access filter(s) associated with this remote user (step 62).

Table 1 below shows the database. A variety of other configurations can be employed for the database. Also, the database can include different and/or additional parameters.

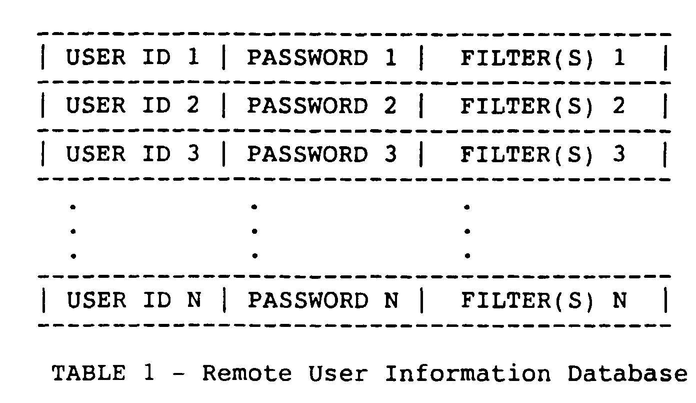

Table 2 below shows an access filter for use in the remote access system according to the invention. Other configurations of the access filter can be employed. Also, the access filter can include different and/or additional fields. As stated previously, access filters are protocol dependent. As shown in Table 2, a Name Binding Protocol (NBP) Filter includes a Show/Hide (S/H) field, and NBP name field, and a NBP type field.

**TABLE 2 -**

| NBP Filter | | |
|---|---|---|
| S/H | NBP Name | NBP Type |

As shown in Table 3, a Zone Filter includes an S/H field and a Zone field.

**TABLE 2 -**

| Zone Filter | |
|---|---|
| S/H | Zone |

Referring now to FIG. 4, in one embodiment, the remote access server 16 includes electronics 38, a plurality of serial communication ports 40₁-40_{N}, and a plurality of network ports 42₁-42_{N}. The server 16 also can include a plurality of internal modems 44₁-44_{N}. The serial ports 40 and the network ports 42 are controlled by the electronics 38.

The electronics 38 include, in some embodiments, a powerful 16 MHz 68EC020 microprocessor and memory such as up to 1 megabyte of battery backed-up static random access memory (SRAM) and possibly 64 kilobytes in an erasable programmable read only memory (EPROM).

Each of the serial communication ports 40 is for coupling with a communication device (e.g., the modem 26 of FIG. 1), or for coupling directly with the telephone lines 22, to provide for communication with a remote computer (e.g., the remote computer 12 of FIGS. 1 and 2) over the telephone lines 22. A connecting cable can be used to couple a serial port 40 with the communication device or with the telephone lines. Each of the serial ports 40 can simultaneously be coupled to a different one of the plurality of remote computers so as to provide simultaneous access to a local computer network for each of the remote computers, even if each of the remote computers employs a different protocol (e.g., IPX, TCP/IP, AppleTalk, NetBEUI, or 802.2/LLC). In some embodiments, the server 16 includes either four or eight serial ports 40, and each port 40 is a DB-25 asynchronous serial port which supports speeds of up to 57.6 kilobits per second (kbps). In some other embodiments, the server 16 includes four 57.6 kbps ports 40 with an internal V.32bis modem 44 associated with each, and four high-speed (115.2 kbps) serial ports 40 with no internal modem associated therewith. In some other embodiments, the server 16 includes a single port 40 for use with ARA.

Each of the network ports 42 is for coupling with a local computer network (e.g., the network 14 of FIGS. 1 and 2), via a connecting cable, to provide for communication with the network. Typically, the server 16 is connected to only one network during normal operation. In some embodiments, the server 16 includes three network ports 42, one for 10BaseT Ethernet, one for Thin Ethernet, and one for Thick Ethernet. In some other embodiments, the server 16 includes a single network port 42 for Token Ring. In some other embodiments, the server 16 includes a single network port 42 for use with Apple LocalTalk. The remote access server 16 shown functionally in

FIG. 4 can be contained in a housing similar to that shown in FIG. 2. The housing is less than or equal to about 1.7 by 17 by 10 inches. The housing can be made rack-mountable.

## Claims

1. A method, performed at a remote access server (16) of a local computer network (14), for limiting access to said local computer network, the method comprising:
providing at least one communication port (40) of the remote access server to provide for communication with a remote computer (12);
coupling at least one network port (42) of the remote access server to said local computer network to provide for communication with the local computer network;
receiving a user identification string (20) from a said communication port, the string having been entered by a remote user (18) at a remote computer (12) which is coupled to the communication port, the string identifying the remote user;
using the user identification string to access a database (30) of the local computer network to determine at least one access filter (Table 2) associated with the user identification string, the access filter being used to prevent the remote computer from communicating with at least one predetermined resource on the local computer network, the database including a user identification string for each remote user and at least one access filter for each user identification string;
allowing the remote computer to access the local computer network and to communicate on the local computer network including, on each attempt by the remote computer to access the local computer network and communicate with a specified resource on the local computer network, matching the access filter to the attempt, and preventing the remote computer from communicating on the local computer network, or allowing it to do so, depending on whether the specified resource is identified by the access filter.

2. The method of claim 1, further comprising
coupling a plurality of communication ports such that a plurality of remote computers are provided simultaneous limited access to the local computer network.

3. The method of claim 1, further comprising
maintaining the database.

4. The method of claim 1, further comprising
coupling a communication device to the communication port for communicating with the remote computer.

5. The method of claim 4, wherein the communication port is a serial port.

6. The method of claim 5, wherein the communication device is a modem.

7. A remote access server (16) of a local computer network (14), for limiting access to said local computer network, the server comprising:
at least one communication port (40) to provide for communication with a remote computer (12);
at least one network port (42) for coupling to said local computer network to provide for communication with the local computer network; and
processing electronics (38) for:
controlling the at least one communication port (40) and the at least one network port (42),
receiving from a said communication port (40) a user identification string (20) which was entered by a remote user (18) at a remote computer (12) coupled to the communication port, which string identifies the remote user,
characterized in that the processing electronics (38) are further arranged:
to use the user identification string to access a database (30) of the local computer network to determine at least one access filter (Table 2) associated with the user identification string, the access filter being used to prevent the remote computer from communicating with at least one predetermined resource on the local computer network, the database including a user identification string for each remote user and at least one access filter for each user identification string, and
to allow the remote computer to access the local computer network and to communicate on the local computer network including, on each attempt by the remote computer to access the local computer network and communicate with a specified resource on the local computer network, matching the access filter to the attempt, and preventing the remote computer from communicating on the local computer network, or allowing it to do so, depending on whether the specified resource is identified by the access filter.

8. The server of claim 7, further comprising a plurality of communication ports such that a plurality of remote computers are provided simultaneous access to the local computer network through the server.

9. The server of claim 7, wherein the processing electronics includes a microprocessor and memory.

10. The server of claim 7, wherein the database is maintained internally by the server.

11. The server of claim 7, wherein the database is maintained on the local computer network and external from the server.

12. The server of claim 7, further comprising a communication device coupled to the communication port for communicating with the remote computer.

13. The server of claim 12, wherein the communication port is a serial port.

14. The server of claim 13, wherein the communication device is a modem.

## Patentansprüche

1. Verfahren, das in einem Fernzugriffsserver (16) eines lokalen Computernetzwerkes (14) durchgeführt wird, zum Begrenzen des Zugriffs auf das lokale Computernetzwerk, wobei das Verfahren umfaßt:
Vorsehen von mindestens einem Kommunikationsport (40) des Fernzugriffsservers, um die Kommunikation mit einem Ferncomputer (12) bereitzustellen;
Koppeln von mindestens einem Netzwerkport (42) des Fernzugriffsservers an das lokale Computernetzwerk, um die Kommunikation mit dem lokalen Computernetzwerk bereitzustellen;
Empfangen einer Benutzeridentifikationskette (20) von dem Kommunikationsport, wobei die Kette durch einen Fernbenutzer (18) an einen Ferncomputer (12) eingegeben wird, der mit dem Kommunikationsport verbunden ist, wobei die Kette den Fernbenutzer identifiziert;
Verwenden der Benutzeridentifikationskette, um auf eine Datenbank (30) des lokalen Computernetzwerkes zuzugreifen, um mindestens einen Zugriffsfilter (Tab. 2) zu bestimmen, der mit der Benutzeridentifiaktionskette assoziiert ist wobei der Zugriffsfilter verwendet wird, um zu verhindern, daß der Ferncomputer mit mindestens einer vorbestimmten Quelle auf dem lokalen Computernetzwerk, der Datenbank, die die Benutzeridentifikationskette für jeden Fembenutzer enthält, und mindestens einem Zugriffsfilter für jede Benutzeridentifikationskette kommuniziert;
Zulassen, daß der Ferncomputer auf das lokale Computernetzwerk zugreift und auf dem lokalen Computernetzwerk kommuniziert, einschließlich des Versuchs, durch den Ferncomputer auf das lokale Computernetzwerk zuzugreifen und mit einer bestimmten Quelle auf dem lokalen Computernetzwerk zu kommunizieren, Inübereinstimmungbringen des Zugriffsfilters mit dem Versuch und Verhindern, daß der Ferncomputer auf dem lokalen Computernetzwerk kommuniziert oder Zulassen, daß er es tut, je nach dem, ob die bestimmte Quelle durch den Zugriffsfilter identifiziert ist.

2. Verfahren nach Anspruch 1, weiterhin umfassend:
Koppeln einer Mehrzahl von Kommunikationsports in der Weise, daß eine Mehrzahl von Ferncomputern gleichzeitig begrenzten Zugang auf das lokale Computernetzwerk erhält.

3. Verfahren nach Anspruch 1, weiterhin umfassend:
Warten der Datenbank.

4. Verfahren nach Anspruch 1, weiterhin umfassen:
Koppeln eines Kommunikationsgerätes an den Kommunikationsport zum Kommunizieren mit dem Ferncomputer.

5. Verfahren nach Anspruch 4, worin der Kommunikationsport ein serieller Port ist.

6. Verfahren nach Anspruch 5, worin das Kommunikationsgerät ein Modem ist.

7. Fernzugnffsserver (16) eines lokalen Computernetzwerkes (14) zum Begrenzen des Zugriffs auf das lokale Computernetzwerk, wobei der Server umfaßt:
mindestens einen Kommunikationsport (40), um die Kommunikation mit einem Ferncomputer (12) bereitzustellen;
mindestens einen Netzwerkport (42) zum Koppeln an das lokale Computernetzwerk, um die Kommunikation mit dem lokalen Computernetzwerk bereitzustellen; und
Verarbeitungselektronik (38) für:
Steuern des mindestens einen Kommunikationsports (40) und des mindestens einen Netzwerkports (42),
Empfangen einer Benutzeridentifikationskette (20) von einem Kommunikationsport (40), welche durch einen Fernbenutzer (18) an einen Ferncomputer (12) eingegeben wird, der mit dem Kommunikationsport gekoppelt ist, wobei die Kette den Fernbenutzer identifiziert,
dadurch gekennzeichnet, daß die Verarbeitungselektronik (38) weiterhin angeordnet ist:
um die Benutzeridentifikationskette zu verwenden, um auf eine Datenbank (30) des lokalen Computernetzwerkes zuzugreifen, um mindestens einen Zugriffsfilter (Tab. 2) zu bestimmen, der mit der Benutzeridentifikationskette assoziiert ist, wobei der Zugriffsfilter verwendet wird, um den Ferncomputer an eine Kommunikation mit mindestens einer vorbestimmten Quelle auf dem lokalen Computernetzwerk zu hindern, wobei die Datenbank eine Benutzeridentifikationskette für jeden Fernbenutzer und mindestens einen Zugriffsfilter für jede Benutzeridentifikationskette enthält, und
um dem Ferncomputer zu erlauben, auf das lokale Computernetzwerk zuzugreifen und auf dem lokalen Computernetzwerk zu kommunizieren, einschließlich jeden Versuchs durch den Ferncomputer, auf das lokale Computernetzwerk zuzugreifen und mit einer bestimmten Quelle auf dem lokalen Computemetzwerk zu kommunizieren, Inübereinstimmungbringen des Zugriffsfilters mit dem Versuch, und Verhindern, daß der Ferncomputer auf dem lokalen Computernetzwerk kommuniziert oder Zulassen, daß er es tut, je nach dem ob die bestimmte Quelle durch den Zugriffsfilter identifiziert ist.

8. Server nach Anspruch 7, weiterhin umfassend eine Mehrzahl von Kommunikationsports, so daß eine Mehrzahl von Ferncomputern gleichzeitig Zugriff auf das lokale Computernetzwerk durch den Server hat.

9. Server nach Anspruch 7, worin die Verarbeitungselektronik einen Mikroprozessor und Speicher umfaßt.

10. Server nach Anspruch 7, worin die Datenbank intern gewartet wird durch den Server.

11. Server nach Anspruch 7, worin die Datenbank auf dem lokalen Computernetzwerk und intern von dem Server gewartet wird.

12. Server nach Anspruch 7, weiterhin umfassend ein Kommunikationsgerät, das mit dem Kommunikationsport gekoppelt ist, zum Kommunizieren mit dem Ferncomputer.

13. Server nach Anspruch 12, worin das der Kommunikatiosnport ein serieller Port ist.

14. Server nach Anspruch 13, worin das Kommunikationsgerät ein Modem ist.

## Revendications

1. Procédé mis en oeuvre dans un serveur d'accès éloigné (16) d'un réseau local d'ordinateurs (14) pour limiter l'accès audit réseau local d'ordinateurs, ledit procédé consistant :
prévoir au moins un port de communication (40) du serveur d'accès éloigné pour établir une communication avec un ordinateur éloigné (12) ;
coupler au moins un port (42) du réseau du serveur d'accès éloigné audit réseau local d'ordinateurs pour établir une communication avec le réseau local d'ordinateurs ;
recevoir une suite (20) d'identification d'utilisateur depuis ledit port de communication, la suite ayant été introduite par un utilisateur éloigné (18) dans un ordinateur éloigné (12), qui est couplé au port de communication, la suite identifiant l'utilisateur éloigné ;
utiliser la suite d'identification d'utilisateur pour accéder à une base de données (30) du réseau local d'ordinateurs pour déterminer au moins un filtre d'accès (tableau 2) associé à la suite d'identification d'utilisateur, le filtre d'accès étant utilisé pour empêcher une communication de l'ordinateur éloigné avec au moins une ressource prédéterminée dans le réseau de l'ordinateur, la base de données comprenant une suite d'identification utilisateur pour chaque utilisateur éloigné et au moins un filtre d'accès pour chaque suite d'identification d'utilisateur ;
amener l'ordinateur éloigné à accéder au réseau local d'ordinateurs et à communiquer dans le réseau local d'ordinateurs, ceci incluant, lors de chaque tentative faite par l'ordinateur éloigné pour accéder au réseau local d'ordinateurs et pour communiquer avec une ressource spécifiée dans le réseau local d'ordinateurs, l'adaptation du filtre d'accès à cette tentative, et empêcher l'ordinateur central de communiquer dans le réseau local d'ordinateurs ou lui permettre de le faire en fonction du fait que la ressource spécifiée est identifiée ou non par le filtre d'accès.

2. Procédé selon la revendication 1, comprenant en outre
le couplage d'une pluralité de ports de communication de telle sorte qu'une pluralité d'ordinateurs éloignés peuvent avoir un accès simultané limité au réseau local d'ordinateurs.

3. Procédé selon la revendication 1, comprenant en outre
le maintien de la base de données.

4. Procédé selon la revendication 1, comprenant en outre
le couplage d'un dispositif de communication au port de communication pour une communication avec l'ordinateur éloigné.

5. Procédé selon la revendication 4, selon lequel le port de communication est un port série.

6. Procédé selon la revendication 5, selon lequel le dispositif de communication est un modem.

7. Serveur d'accès éloigné (16) d'un réseau local d'ordinateurs (14) pour limiter l'accès audit réseau local d'ordinateurs, le serveur comprenant :
au moins un port de communication (40) pour établir une communication avec un ordinateur éloigné (12) ;
au moins un port (42) de réseau pour coupler ledit réseau local d'ordinateurs de manière à établir une communication avec le réseau local d'ordinateurs ; et
une unité électronique de traitement (38) pour :
commander le au moins un port de communication (40) et le au moins un port (42) de réseau,
recevoir de la part dudit port de communication (40) une suite d'identification d'utilisateur (20), qui a été introduite par un utilisateur éloigné (18) dans un ordinateur éloigné (12) couplé au port de communication, laquelle suite identifie l'utilisateur éloigné,
caractérisé en ce que l'unité électronique de traitement (38) est en outre agencée de manière à :
utiliser la suite d'identification d'utilisateur pour accéder à une base de données (30) du réseau local d'ordinateurs pour déterminer au moins un filtre d'accès (tableau 2) associé à la suite d'identification d'utilisateur, le filtre d'accès étant utilisé pour empêcher l'ordinateur éloigné de communiquer avec au moins une ressource prédéterminée dans le réseau local d'ordinateurs, la base de données incluant une suite d'identification d'utilisateur pour chaque utilisateur éloigné et au moins un filtre d'accès pour chaque suite d'identification d'utilisateur, et
permettre à l'ordinateur éloigné d'accéder au réseau local d'ordinateurs et de communiquer dans le réseau local d'ordinateurs, ceci incluant, lors de chaque tentative faite par l'ordinateur éloigné pour accéder au réseau local d'ordinateurs et pour communiquer avec une ressource spécifiée dans le réseau local d'ordinateurs, l'adaptation du filtre d'accès à cette tentative, et empêcher l'ordinateur central de communiquer dans le réseau local d'ordinateurs ou lui permettre de le faire en fonction du fait que la ressource spécifiée est identifiée ou non par le filtre d'accès.

8. Serveur selon la revendication 7, comprenant en outre une pluralité de ports de communication de telle sorte qu'une pluralité d'ordinateurs éloignés ont simultanément accès au réseau local d'ordinateurs au moyen du serveur.

9. Serveur selon la revendication 7, dans lequel l'unité électronique de traitement inclut un microprocesseur et une mémoire.

10. Serveur selon la revendication 7, dans lequel la base de données est conservée de façon interne par le serveur.

11. Serveur selon la revendication 7, dans lequel la base de données est conservée dans le réseau local d'ordinateurs et à l'extérieur du serveur.

12. Serveur selon la revendication 7, comprenant en outre un dispositif de communication couplé au port de communication pour communiquer avec l'ordinateur éloigné.

13. Serveur selon la revendication 12, dans lequel le port de communication est un port série.

14. Serveur selon la revendication 13, dans lequel le dispositif de communication est un modem.
